(19) **Europäisches Patentamt / European Patent Office / Office européen des brevets**

(11) **EP 4 578 647 A1**

(12) # EUROPEAN PATENT APPLICATION

(43) Date of publication:
**02.07.2025   Bulletin 2025/27**

(21) Application number: **23220710.0**

(22) Date of filing: **29.12.2023**

(51) International Patent Classification (IPC):
**B32B 27/08** $^{(2006.01)}$     **B32B 27/18** $^{(2006.01)}$
**B32B 27/32** $^{(2006.01)}$     **C08J 5/18** $^{(2006.01)}$
**C08L 23/06** $^{(2006.01)}$

(52) Cooperative Patent Classification (CPC):
**B32B 27/08; B32B 27/18; B32B 27/32; C08J 5/18; C08L 23/06;** B32B 2250/03; B32B 2250/24; B32B 2250/246; B32B 2250/40; B32B 2264/00; B32B 2307/30; B32B 2307/308; B32B 2307/40; B32B 2307/406; B32B 2307/408;     (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Abu Dhabi Polymers Co. Ltd (Borouge) - Sole Proprietorship L.L.C.**
  **Abu Dhabi (AE)**
• **Borealis AG**
  **1020 Vienna (AT)**

(72) Inventors:
• **TAJANE, Vilas**
  **400 063 Mumbai (IN)**
• **TEO, Aster**
  **049145 Singapore (SG)**
• **PANDYA, Rakesh**
  **400 063 Mumbai (IN)**
• **THAKOR, Pavankumar**
  **400 063 Mumbai (IN)**
• **PURI, Sandeep**
  **049145 Singapore (IN)**

(74) Representative: **Maiwald GmbH**
  **Elisenhof**
  **Elisenstraße 3**
  **80335 München (DE)**

(54)     # POLYETHYLENE FILM FOR SOIL SOLARISATION

(57)     The present invention relates to a multilayer polyethylene film for soil solarisation comprising two linear low density polyethylenes, a soil solarisation system comprising the multilayer polyethylene film and the use of the multilayer polyethylene film for soil solarisation.

**EP 4 578 647 A1**

(52) Cooperative Patent Classification (CPC): (Cont.)
B32B 2307/546; B32B 2307/558; B32B 2307/581;
B32B 2307/5825; B32B 2307/72; B32B 2307/7242;
B32B 2307/7265; B32B 2307/7376; B32B 2410/00

# EP 4 578 647 A1

**Description**

**Field of the Invention**

The present invention relates to a multilayer polyethylene film for soil solarisation comprising two linear low density polyethylenes, a soil solarisation system comprising the multilayer polyethylene film and the use of the multilayer polyethylene film for soil solarisation.

**Background to the Invention**

Soil solarisation is an environmentally friendly and non-chemical way to get rid of pests, weeds, and diseases and is already adopted in various agricultural production systems. It involves covering weed-free ground with a transparent, airtight material, often a polyethylene (PE) film, so that the solar energy can heat up the soils and its rhizosphere. Under the PE film, the ground's top 0 to 10 cm can get as hot as 42 to 60 °C depending on local climatic conditions.

The heat is used for the soil solarisation method's primary aim, which is to eradicate weeds and pests.

Such a treatment improves the chemistry of the soil profiles, which in turn results in increased fertility. Further, the soil is also protected from erosion since the film prevents water and wind from degrading the ground.

While the method of soil solarisation is highly beneficial and has found widespread application throughout the world, requirements on the usable films are rather demanding, leading to the single use of films having a high thickness and small width.

It was now surprisingly found, that a multilayer polyethylene film comprising two linear low density polyethylenes (LLDPE) has excellent properties for the use in soil solarisation.

## Summary of the invention

The invention relates to a multilayer polyethylene film for soil solarisation comprising an inner layer (IL), an outer layer (OL) and a core layer (CL) between the inner and outer layer, characterized in that

- the core layer comprises in a combined amount of at least 80 wt.-%, preferably in the range of 85 to 99 wt.-%, based on the total weight of the core layer, a first linear low density polyethylene LLDPE-A having a $MFR_2$ (190°, 2.16 kg), determined according to ISO 1133, of from 0.1 to 0.5 g/10 min, preferably, from 0.1 to 0.3 g/10 min, and a second linear low density polyethylene LLDPE-B having a $MFR_2$ (190°, 2.16 kg), determined according to ISO 1133, of from 0.9 to 2.2 g/10 min, preferably from 1.1 to 1.9 g/10 min; and
- the inner layer (IL) comprises the second linear low density polyethylene LLDPE-B in an amount of at least 60 wt.-%, preferably in the range of 65 to 95 wt.-%, based on the total weight of the inner layer; and
- the outer layer (OL) comprises the second linear low density polyethylene LLDPE-B in an amount of at least 60 wt.-%, preferably in the range of 65 to 95 wt.-%, based on the total weight of the outer layer.

In another aspect, the invention relates to a soil solarisation system comprising:

i) crop-free soil
ii) the multilayer polyethylene film as described above or below placed on top of the soil; and
iii) a drip irrigation system between the film and the soil.

In a further aspect, the invention relates to the use of the multilayer polyethylene film as described above or below, for soil solarisation.

**Definitions**

For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

A polyethylene in the present disclosure is an ethylene-based polymer containing at least 50 wt.-% ethylene monomers.

## Detailed description of the invention

The inventive multilayer polyethylene film for soil solarisation comprises an inner layer (IL), an outer layer (OL) and a core layer (CL).

## Core layer (CL)

The multilayer polyethylene film of the invention comprises a core layer (CL).

This core layer (CL) comprises a first linear low density polyethylene LLDPE-A having a $MFR_2$ (190°, 2.16 kg), determined according to ISO 1133, of from 0.1 to 0.5 g/10 min. It is preferred that the LLDPE-A has a $MFR_2$ (190°, 2.16 kg), determined according to ISO 1133, of from 0.1 to 0.3 g/10 min.

The core layer (CL) further comprises a second linear low density polyethylene LLDPE-B having a $MFR_2$ (190°, 2.16 kg), determined according to ISO 1133, of from 0.9 to 2.2 g/10 min. It is preferred that the LLDPE-B has a $MFR_2$ (190°, 2.16 kg), determined according to ISO 1133, of from 1.1 to 1.9 g/10 min.

The LLDPE-A and LLDPE-B are the main components of the core layer. Accordingly, the core layer comprises LLDPE-A and LLDPE-B in a combined amount of at least 80 wt.-%, preferably in the range of 85 to 99 wt.-%, based on the total weight of the core layer.

The weight ratio between the LLDPE-A and the LLDPE-B in the core layer (CL) is preferably in the range of 15:1 to 5:1, more preferably 12:1 to 7:1.

In a particularly preferred embodiment, the combined amount of LLDPEA and the LLDPE-B in the core layer is at least 92 wt.%, more preferably in the range of 95.0 to 99.9 wt.-%, based on the total weight of the core layer.

*LLDPE-A*

A linear polyethylene is characterized as a linear low density polyethylene (LLDPE), when its density is in the range of 910 to 940 kg/m³.

The LLDPE-A in the core layer of the inventive multilayer film preferably has a density of from 915 to 930 kg/m³, more preferably from 918 to 925 kg/m³, determined according to ISO 1183.

Unlike low density polyethylenes (LDPE) that are polyethylene homopolymers, linear low density polyethylenes (LLDPE) are copolymers of ethylene and at least one other comonomer.

Preferably, the LLDPE-A is a copolymer of ethylene with one comonomer selected from alpha-olefins having from 4 to 6 carbon atoms. More preferably, the LLDPE-A is a copolymer of ethylene and 1-butene or 1-hexene, most preferred a copolymer of ethylene and 1-butene.

Preferably, the total amount of comonomers present in the LLDPE-A is in the range of 2.0 to 7.0 mol%, more preferably 2.5 to 6.5 mol%, and most preferably from 3.0 to 6.0 mol%, based on the total amount of monomers in the LLDPE-A.

A high value for the molecular weight distribution (MWD) indicates a high polydispersity of the polymer.

In the present invention, it is preferred that the MWD of the LLDPE-A is in the range of 10 to 30, more preferably 15 to 21.

Such a high MWD can be achieved for example, when the respective polymer contains at least two polymer fractions that differ from each other in molecular weight.

Accordingly, in a preferred embodiment, the LLDPE-A contains two polyethylene fractions A and B in a combined amount of at least 95 wt.%, preferably 96 to 100 wt.%, based on the total amount of the LLDPE-A.

In this embodiment, the polyethylene fraction A has a $MFR_2$ (190°, 2.16 kg), determined according to ISO 1133, in the range of from 100 to 500 g/10 min, preferably 200 to 400 g/10 min.

In view of the relatively low $MFR_2$ value of the LLDPE-A (0.1 to 0.5 g/10 min), in this embodiment, the polyethylene fraction B has to have a substantially lower $MFR_2$ than the polyethylene fraction A, leading to the LLDPE-A being bimodal in view of molecular weight.

Further, in this embodiment, the weight ratio between polyethylene fraction A and polyethylene fraction B is preferably in the range of 30:70 to 50:50.

Such bimodal LLDPEs and their production are, for example, described in WO 2004/000933 A1, p. 9 to 12.

As the LLDPE-A, resin Borstar FB1200 as produced by Borouge may be used.

Preferably, the LLDPE-A is present in the core layer of the multilayer polyethylene film in an amount of from 85 to 95 wt.%, more preferably from 86 to 91 wt.%, based on the total weight of the core layer.

*LLDPE-B*

The core layer of the inventive multilayer polyethylene film further comprises the LLDPE-B.

It is preferred, that the density of the LLDPE-B is from 912 to 925 kg/m$^3$, more preferably from 915 to 921 kg/m$^3$, determined according to ISO 1183.

Preferably, the LLDPE-B is a terpolymer of ethylene with two comonomers selected from alpha-olefins having from 4 to 8 carbon atoms, more preferably a terpolymer of ethylene, 1-butene and 1-hexene.

The LLDPE-B preferably has a MWD of 6 or less and usually more than 1, more preferably of from 3 to 5.

Preferably, the total amount of comonomers present in the LLDPE-B is from 0.5 to 10 mol%, preferably from 1 to 8 mol%, more preferably from 1 to 5 mol%, still more preferably from 1.5 to 5 mol% and most preferably from 2.5 to 4 mol%.

The LLDPE-B can further be a multimodal, preferably bimodal LLDPE.

The LLDPE-B preferably has a MWD in the range of from 1 to 6, more preferably of from 3 to 5.

Suitable multimodal ethylene terpolymers are disclosed, for example, in WO2016/083208.

As far as definitions (such as for the "modality" of a polymer) and production methods for these ethylene terpolymers are concerned, it is referred to WO2016/083208. Furthermore, all embodiments and preferred embodiments of such ethylene terpolymers as described in WO2016/083208, which have a density in the range of from 912 to 925 kg/m$^3$ and a MFR$_2$ in the range of 0.9 to 2.2 g/10min are also preferred embodiments of the LLDPE-B in the present disclosure, whether or not explicitly described herein.

As the LLDPE-B, commercially available products such as AnteoTM from Borealis or Borouge having the properties as required herein, such as AnteoTM FK1828 may be used.

Preferably, the LLDPE-B is present in the core layer of the multilayer polyethylene film in an amount of from 5 to 15 wt.%, more preferably from 7 to 13 wt.%, based on the total weight of the core layer.

**Inner and outer layer**

The multilayer polyethylene film of the invention comprises besides the core layer (CL) further an inner and an outer layer.

The inner layer (IL) in the multilayer polyethylene film for soil solarisation is the layer that faces the soil.

Accordingly, the outer layer (OL) in the multilayer polyethylene film for soil solarisation is the layer facing the sun.

The core layer (CL) as described above is between the inner and outer layer.

While the inventive multilayer polyethylene film for soil solarisation may comprise further layers, such as tie layers, it is preferred that the film consists of the three layers, i.e. the inner, the outer and the core layer as described above or below.

The inner layer (IL) comprises the LLDPE-B as described above in an amount of at least 60 wt.%, preferably in the range of 65 to 95 wt%, based on the total weight of the inner layer.

The outer layer (IL) also comprises the LLDPE-B as described above in an amount of at least 60 wt.%, preferably in the range of 65 to 95 wt%, based on the total weight of the outer layer.

All embodiments and preferred features of the LLDPE-B described above for the LLDPE-B in the core layer, are also preferred embodiments and features of the LLDPE-B in the inner or outer layer.

Low density polyethylenes can increase the processability of LLDPE films.

Besides the LLDPE-B, the inner layer (IL) can further comprise a low density polyethylene (LDPE).

The weight ratio between the LLDPE-B and the LDPE in the inner layer is preferably in the range of 15: 1 to 5:1, more preferably 10: 1 to 6:1.

It is also preferred that the combined amount of LLDPE-B and LDPE in the inner layer (IL) is at least 87 wt.%, more preferably in the range of 89 to 99 wt.%, based on the total weight of the inner layer.

The amount of LDPE in the inner layer (IL) is preferably in the range of 5 to 15 wt.%, preferably 7 to 13 wt.%, based on the total weight of the inner layer.

Similar to the inner layer of the inventive multilayer polyethylene film, the outer layer can further comprise a low density polyethylene (LDPE).

The weight ratio between the LLDPE-B and the LDPE in the outer layer is preferably in the range of 15:1 to 5:1, more preferably 10:1 to 6:1.

It is also preferred that the combined amount of LLDPE-B and LDPE in the outer layer (OL) is at least 90 wt.%, more preferably in the range of 92 to 99 wt.%, based on the total weight of the outer layer.

The amount of LDPE in the outer layer (OL) is preferably in the range of 5 to 15 wt.%, preferably 7 to 13 wt.%, based on the total weight of the outer layer.

*LDPE*

The LDPE that can be present in the outer and/or inner layer preferably has a MFR$_2$ (190°, 2.16 kg), determined according to ISO 1133, of from 0.2 to 1.0 g/10 min, more preferably 0.3 to 0.7 g/10 min.

The density of the LDPE is preferably in the range of 917 to 930 kg/m$^3$, more preferably of 920 to 926 kg/m$^3$,

determined according to ISO 1183.

## Additives

Besides the polyethylenes, as described above, the multilayer polyethylene film may contain additives (Ad).

The additives (Ad) are selected from the group consisting of antioxidants, stabilizers, nucleating agents, antistatic agents, polymer processing aids, UV stabilizers, anti-blocking agents, anti-drip agents and mixtures thereof, preferably from the group consisting of antioxidants, stabilizers, slip agents, anti-blocking agents, antioxidants, polymer processing aids, UV stabilizers and anti-drip agents.

Such additives are generally commercially available and are described, for example, in "Plastic Additives Handbook", pages 871 to 873, 5th edition, 2001 of Hans Zweifel.

Since the multilayer polyethylene film of the invention was developed for soil solarisation, it is beneficial that the film is stabilized against the UV-light of the sun. Accordingly, it is preferred that at least one, preferably all of the inner, outer and core layers comprise an UV-stabilizer.

The amount of UV-stabilizer in the at least one layer is preferably in the amount of 0.5 to 5.0 wt.%, more preferably 1.0 to 3.0 wt.%, based on the total weight of the layer in which the UV-stabilizer is present.

In a preferred embodiment of the inventive multilayer polyethylene film, the inner layer (IL) further comprises an anti-drip agent as an additive, preferably in an amount in the range of 2 to 10 wt.%, more preferably 4 to 8 wt.%, based on the total weight of the inner layer.

It is further preferred that the multilayer polyethylene film comprises further additives other than UV-stabilizer and anti-drip agent in a combined amount of less than 7 wt.% in each layer, based on the total weight of each layer.

Since the multilayer polyethylene film of the invention was developed for soil solarisation, it is beneficial that as much as possible of the sun light reaches the soil and heats it up.

A colorant would substantially decrease the amount of sunlight reaching the soil. Accordingly, the inventive multilayer polyethylene film preferably does not comprise a colorant as an additive.

Colorants are known to the person skilled in the art and are described, for example, in "Plastic Additives Handbook", pages 840 to 869, 5th edition, 2001 of Hans Zweifel.

## Multilayer film

The inventive multilayer polyethylene film comprises, preferably consists of the inner, the outer and the core layer as described above.

The thickness ratios between the three layers (OL:CL:IL) is preferably in the range of 0.8-1.2:1.8-2.2:0.8-1.2, more preferably 1:2:1.

It is preferred that as much as possible of the sunlight reaches the soil. Accordingly, it is beneficial if the multilayer polyethylene film has a high total light transmittance. Preferably, the total light transmittance of the inventive multilayer polyethylene film is more than 85%, more preferably in the range of 88 to 99%, determined according to ASTM D1003.

It is preferred that the sunlight reaches the soil as direct as possible. Accordingly, it is beneficial if the multilayer polyethylene film has a low haze.

Preferably the haze of the inventive multilayer polyethylene film is less than 15%, more preferably in the range of 1 to 14%, determined according to ASTM D1003.

The inventive multilayer polyethylene film for soil solarisation preferably has one or more, more preferably all of the following mechanical properties.

Preferably, the dart drop impact strength (DDI), measured according to ASTM D 1709/A, of the multilayer polyethylene film is in the range of from 5 to 20 g/$\mu$m, more preferably from 8 to 15 g/$\mu$m.

Preferably, the tear strength (elmendorf) in machine direction (MD) of the multilayer polyethylene film is in the range of 2 to 15 gf/$\mu$m, more preferably in the range of 4 to 12 gf/$\mu$m, determined according to ASTM D1922.

The tear strength (elmendorf) in transverse direction (TD) of the multilayer polyethylene film is in the range of 5 to 25 gf/$\mu$m, more preferably in the range of 10 to 20 gf/$\mu$m, determined according to ASTM D1922.

The multilayer polyethylene film preferably has a tensile modulus (1% secant) in machine direction (MD) in the range of 100 to 300 MPa, preferably 150 to 250 MPa, and/or a tensile modulus (1% secant) in transverse direction (TD) in the range of 110 to 310 MPa, preferably 160 to 260 MPa, determined according to ASTM D882. The multilayer polyethylene film preferably has a tensile stress at break in machine direction (MD) in the range of 30 to 60 MPa, and/or a tensile stress at break in transverse direction (TD) in the range of 10 to 40 MPa, determined according to ISO 527-3.

The multilayer polyethylene film preferably has a nominal tensile strain at break in machine direction (MD) in the range of 350 to 800%, and/or a nominal tensile strain at break in transverse direction (TD) in the range of 250 to 700%, determined according to ISO 527-3.

The combination of LLDPE-A and LLDPE in the inventive film leads to improved mechanical properties of the film.

Accordingly, the thickness of the film can be decreased and the width of the film can be increased.

The inventive multilayer polyethylene film preferably has a thickness in the range of from 10 to 100 $\mu$m, more preferably in the range from 12 to 50 $\mu$m. still more preferably in the range from 15 to 35 $\mu$m.

The width of the film is preferably at least 2 m, more preferably is in the range of 3 to 5 m.

In a particularly preferred embodiment of the multilayer polyethylene film, the film consists of the inner, outer and core layer and

- the inner layer (IL) consists of LLDPE-B in an amount in the range of 79 to 85 wt.%, LDPE in an amount in the range of 7 to 13 wt.%, UV-stabilizer as an additive in an amount in the range of 1 to 3 wt.%, an anti-drip agent as an additive in an amount in the range of 4 to 8 wt.% and further additives in a combined amount of less than 7 wt%;
- the core layer (CL) consists of LLDPE-A in an amount in the range of 85 to 91 wt.%, LLDPE-B in an amount in the range of 7 to 13 wt.%, an UV-stabilizer as an additive in an amount in the range of 1 to 3 wt.% and further additives in a combined amount of less than 7 wt.%; and
- the outer layer (OL) consists of LLDPE-B in an amount in the range of 85 to 91 wt.%, LDPE in an amount in the range of 7 to 13 wt.%, an UV-stabilizer as an additive in an amount in the range of 1 to 3 wt.%, and further additives in a combined amount of less than 7 wt%;

wherein the weight percentages are based on the total weight of each layer; the combined amount of the polyethylenes and additives in each layer adds up to 100 wt.%, and the further additives are selected from the group consisting of slip agents, anti-blocking agents, antioxidants and polymer processing aids.

**System for soil solarisation**

The characteristics of the inventive multilayer polyethylene film as described above renders the film ideal for the use as a soil solarisation film (SSF).

This soil solarisation film can be used in a soil solarisation system.

Accordingly, the invention also refers to a soil solarisation system comprising:

i) crop-free soil;
ii) the multilayer polyethylene film as described above placed on top of the soil; and
iii) a drip irrigation system between the film and the soil.

Crop-free soil describes soil that is essentially free from crop plants, e.g., after the harvest of the previous crop plant and before sowing the seeds for the next crop plant.

Before placing the SSF on the crop-free soil, it is beneficial to prepare the soil.

It is therefore preferred that the crop-free soil is prepared before the soil solarisation by at least one of the following methods:

- Cleaning the field (crop-free soil) from weeds and debris;
- Tilling the soil to break up large earth chunks;
- Facultative soil aeration to decrease compaction;
- Arranging beds (flat or raised);
- Making central elevations in the covered strips for rainwater to run off the SSF.

To prevent leakage of heat, air and/or moisture from under the SSF, it is preferred that the edges of the SSF are buried in the soil.

The drip irrigation system ensures that the moisture content of the soil remains sufficiently high during the soil solarisation.

The inventive multilayer polyethylene film as described above has a high puncture and tear resistance and can therefore be used more than once. Preferably, the multilayer polyethylene film is used in at least two soil solarisation cycles.

**Experimental section**

**A. Determination Methods**

The following definitions of terms and determination methods apply for the above general description of the invention as well as to the below examples, unless otherwise defined.

**a) Measurement of melt flow rate MFR**

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{2\,1}/MFR_5$.

**b) Density**

Density of the polymer was determined according to ISO 1183-1:2004 (method A) on compression molded specimen prepared according to ISO 17855-2 and is given in $kg/m^3$.

**c) GPC conventional method**

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i / M_i)} \quad (1)$$

$$M_w = \frac{\sum_{i=1}^{N} (A_i \times M_i)}{\sum_{i=1}^{N} A_i} \quad (2)$$

$$M_z = \frac{\sum_{i=1}^{N} (A_i \times M_i^2)}{\sum_{i=1}^{N} (A_i \times M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methyl-phenol) was used. The chromatographic system was operated at column temperature of 160 °C and detector at 160 °C and at a constant flow rate of 1 mL/min. 200 μL of sample solution was injected per analysis. Data collection was performed using PolymerChar GPC-IR control software.

The column set was calibrated using universal calibration (according to ISO 16014-2:2003) with 18 narrow MWD polystyrene (PS) standards in the range of 0.37 kg/mol to 11,000 kg/mol. The PS standards were dissolved at room temperature over several hours. The conversion of the polystyrene peak molecular weight to polyolefin molecular weights is accomplished by using the Mark Houwink equation and the following Mark Houwink constants:

$$\mathbf{K_{PS} = 19 \times 10^{-3}\ mL/g,} \qquad \mathbf{\alpha_{PS} = 0.655}$$

$$\mathbf{K_{PE} = 39 \times 10^{-3}\ mL/g,} \qquad \mathbf{\alpha_{PE} = 0.725}$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm BHT under continuous gentle shaking. Sample vials were purged with $N_2$ gas prior to solvent filling.

**d) Comonomer content**

Comonomer Content (%wt and %mol) was determined by quantitative nuclear-magnetic resonance (NMR) spectroscopy.

**Quantitative $^{13}C\{^{1}H\}$ NMR** spectra recorded in the molten-state using a Broker Avance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (lk) transients were acquired per spectra.

Quantitative $^{13}C\{^{1}H\}$ NMR spectra were processed, integrated and relevant quantitative properties determined from the integrals. All chemical shifts are internally referenced to the bulk methylene signal ($\delta+$) at 30.00 ppm {randall89}. Characteristic signals corresponding to the incorporation of 1-butene were observed {randall89} and the comonomer fraction calculated as the traction of 1-butene in the polymer with respect to all monomer in the polymer.

The amount of isolated 1-butene incorporated in EEBEE sequences was quantified using the integral of the *B2 sites at 39.9 ppm accounting for the number of reporting sites per comonomer

$$B = I_{*B2}$$

With no other signals indicative of other comonomer sequences, i.e. consecutive comonomer incorporation, observed the total 1-butene comonomer content was calculated based solely on the amount of isolated 1-butene sequences:

$$Btotal = B$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I_{\alpha\alpha B2B2}$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I_{\beta\beta B2B2}$$

Due to the overlap of the *B2 and *$\beta$B2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal )$$

Characteristic signals corresponding to the incorporation of 1-hexene were observed {randall89} and the comonomer fraction calculated as the fraction of 1-hexene in the polymer with respect to all monomer in the polymer.

The amount isolated 1-hexene incorporated in EEHEE sequences was quantified using the integral of the *B4 sites at 38.3 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non-consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

Due to the overlap of the signals from the *B4 and *$\beta\beta B4B4$ sites from isolated (EEHEE) and non-consecutively (EEHEHEE) incorporated 1-hexene respectively the total amount of isolated 1-hexene incorporation is corrected based on the amount of non-consecutive 1-hexene present:

$$H = I_{*B4} - 2 * I\beta\beta B4B4$$

The total 1-hexene content was calculated based on the sum of isolated, consecutive and non-consecutively incorporated 1-hexene:

$$Htotal = H + HH + HEH$$

The total mole fraction of 1-hexene in the polymer was then calculated as:

$$fH = Htotal / ( Etotal + Btotal + Htotal )$$

The amount of ethylene was quantified using the integral of the bulk methylene ($\delta$+) sites at 30.00 ppm. This integral included the $\gamma$ site as well as the 3B4 sites from 1-hexene. The total ethylene content was calculated based on the bulk integral and compensating for the observed 1-butene and 1-hexene sequences and end-groups:

$$E = I_{\delta+} / 2$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*(I_{2S} + I_{3S})$$

The presence of isolated comonomer units is corrected for based on the number of comonomer units and saturated end-groups present:

$$Etotal = E + (\S/2)*B + (2/2)*H + (1/4)*HH + (3/4)*HEH + (3/2)*S$$

The mole percent comonomer incorporation is calculated from the mole fraction:

$$B\,[mol\%] = 100 * fB$$

$$H\,[mol\%] = 100 * fH$$

The weight percent comonomer incorporation is calculated from the mole fraction:

$$B\,[wt\%] = 100 * (fB*56.11) / ((fB*56.11) + (fH*84.16) + ((1-(fB+fH))*28.05))$$

$$H\,[wt\%] = 100 * (fH*84.16) / ((fB*56.11) + (fH*84.16) + ((1-(fB+fH))*28.05))$$

randall89: J. Randall, Macromol. Sci., Rev. Macromol. Chcm. Phys. 1989, C29, 201.

klimke06: Klimke, K., Parkinson, M., Piel, C, Kaminsky, W., Spiess, H.W., Wilhelm, M., Macromol. Chem. Phys.2006;207:382.

parkinson07: Parkinson, M., Klimke, K., Spiess, H.W., Wilhelm, M., Macromol. Chem. Phys.2007;208:2128.

pollard04: Pollard, M., Klimke, K., Graf, R., Spiess, H.W., Wilhelm, M., Sperber, O., Piel, C, Kaminsky, W., Macromolecules 2004;37:813.

filip05: Filip, X., Tripon, C, Filip, C, J. Mag. Resn. 2005, 176, 239

griffin07: Griffin, J.M., Tripon, C, Samoson, A., Filip, C, and Brown, S.P., Mag. Res. in Chem.2007 45, SI, S198

castignolles09: Castignolles, P., Graf, R., Parkinson, M., Wilhelm, M., Gaborieau, M., Polymer 50 (2009) 2373

### e) Mechanical Properties

Tensile properties of polyethylene resin were determined on molded specimens prepared from compression-moulded plaques having a sample thickness of 4 mm. Tensile modulus was determined according to ISO 527-2/1 A at 1 mm/min. and 23°C. To determine stress at yield, a test speed of 50 mm/min. was used.

### Tensile Modulus and Tensile Stress at Break of films

Tensile properties of films were determined at 23°C according to ISO 527-3 with a specimen Type 2 using blown films. Tensile modulus in machine direction (MD) and tensile modulus in transverse direction (TD) were determined as 1 % secant modulus with 5 mm/min test speed and 50 mm gauge length according to ASTM D882. Tensile stress at break of films were determined according to ISO 527-3 specimen Type 2 with 50 mm gauge length and 500 mm/min test speed. The film samples were produced as described below under "Examples".

### Nominal Tensile Strain at Break of films

Nominal Tensile strain at break in machine (MD) and transverse direction (TD) were determined according to ISO 527-3 on films with a thickness as indicated and produced as described below under "Examples".

### Tear Strength of films

Elmendorf tear strength in machine direction (MD) and in transverse direction (TD) were measured according to ASTM D1922 or ISO 6383-2 and reported in Gram-force (gf).

Tear Strength per unit thickness (gf/$\mu$m) is calculated by dividing Elmendorf Tear strength (in gf) to the thickness of film (in $\mu$m)

### Dart Drop Impact

Dart drop impact (DDI) of films was determined according to ASTM D1709 "method "A" on films with a thickness as indicated and produced as described below under "Examples" and reported in gram (g).

DDI per unit thickness (in g/$\mu$m) is calculated by dividing DDI (in gram) to the thickness of film (in $\mu$m).

### f) Haze and Total Light transmittance

Total light transmittance and Haze of the plastic films was determined according to ASTM D 1003 with a Haze-Gard meter, BYK-Gardner, on films with a thickness as indicated and produced as described below under "Examples". Total transmittance is the ratio of transmitted light to the incident light, measured using the hazemeter. It is influenced by the absorption and reflection properties. The total transmitted light consists of the directly transmitted and the diffused components. Film specimen with minimum 7 cm radius were used, and 5 specimens per sample and a reference sample were measured.

### B. <u>Examples</u>

**Manufacturing of exemplary LLDPE-A1**

*a) Catalyst*

The polymerization catalyst for polymerizing the LLDPE-A1 was prepared according to example 1 of EP 1 378 528 A1.

*b) Polymerization LLDPE-A1*

In a prepolymerization stage a first loop reactor having a volume of 50 dm$^3$ was operated at 70 °C and 64 bar pressure. For producing a prepolymerization fraction ethylene, 1-butene and hydrogen were added. In addition, the polymerization catalyst prepared according to the description above and triethylaluminium (TEA) cocatalyst were introduced into the reactor. The conditions in the reactor as shown in Table A. The polymer slurry was withdrawn from the first loop reactor and transferred into a loop reactor having a volume of 500 dm$^3$. This second loop reactor was operated at 85°C and 64 bar pressure. Into the reactor were introduced ethylene, 1-butene and hydrogen. No additional catalyst feed was introduced into the reactor. The conditions in the reactor as shown in Table A.

The polymer slurry was withdrawn from the second loop reactor and transferred into a flash vessel operated at 3 bar pressure and 70 °C temperature where the hydrocarbons were substantially removed from the polymer. The polymer was then introduced into a gas phase reactor operated at a temperature of 78.5°C and a pressure of 19.6 bar. In addition ethylene, 1-butene and hydrogen were introduced into the reactor. The conditions are shown in Table A.

The resulting polymer was purged with nitrogen (about 50 kg/h) for one hour, stabilised with 1000 ppm of Irganox 1010 and Irgafos 168 and 1000 ppm Ca-stearate and then extruded to pellets in a counter-rotating twin screw extruder CIM90P (manufactured by Japan Steel Works) so that the throughput was 223 kg/h and the screw speed was 323 rpm.

Table A: Polymerization conditions for LLDPE-A1.

|  |  | LLDPE-A1 |
|---|---|---|
| **Prepolymeriser:** |  |  |
| Temperature | °C | 70 |
| Pressure | Bar | 64 |
| Split | wt-% | 1.4 |
| H2/C3 feed ratio | kg/ton C3 | 0.2 |
| C4/C2 feed ratio | kg/ton C2 | 40 |
| **Loop:** |  |  |
| Temperature | °C | 85 |
| Pressure | Bar | 64 |
| C2-concentration | mol% | 2.43 |
| H2/C2 molar ratio | mol/kmol | 350 |
| C4/C2 molar ratio | mol/kmol | 641 |
| C4/C2 feed ratio | kg/ton C2 | 47-48 |
| Split | wt-% | 37.6 |
| MFR$_2$ | g/10 min | 270-340 |
| Density | kg/m$^3$ | 950.5-951.5 |
| **Gas phase:** |  |  |
| Temperature | °C | 78.5 |
| Pressure | Bar | 19.6 |
| C2-concentration | mol% | 3.6 |
| H2/C2 molar ratio | mol/kmol | 5.8-6.1 |
| C4/C2 molar ratio | mol/kmol | 765 |

(continued)

| Gas phase: | | |
|---|---|---|
| C4/C2 feed ratio | kg/ton C2 | 139-140 |
| Split | wt-% | 61.0 |
| Density (base resin) | kg/m$^3$ | 920.0-921.2 |
| MFR$_5$ (base resin) | g/10 min | 0.60-0.74 |
| **Final pellets** | | |
| Density | kg/m$^3$ | 921 |
| MFR$_2$ | g/10 min | 0.17 |
| M$_w$ | g/mol | 209,650 |
| M$_n$ | g/mol | 11,750 |
| MWD | | 17.8 |

The inventive soil solarisation film (SSF) was a 3-layered film, wherein each layer was a polyethylene layer containing suitable additives (see Table 1). The outer, core and inner layers are present in a thickness ratio of 1:2:1 (OL:CL:IL). The composition of each layer is given in Table 1:

**Table 1:** Inventive SSF formulations.

| 3-layer polyethylene film | Formulations |
|---|---|
| Outer Layer of film (layer OL) | LLDPE-B (FK1828, 88 wt.%), LDPE (1005FY20, 10 wt.%) UV protection masterbatch (2 wt.% ) |
| Core Layer of film (layer CL) | LLDPE-A1 (88 wt.%), LLDPE-B (FK1828, 10 wt.%) UV protection masterbatch (2 wt.%) |
| Inner Layer of film (layer IL) | LLDPE-B (FK1828, 82 wt.%), LDPE (1005FY20, 10 wt.%), UV protection masterbatch (2 wt.%), Anti-drip agent (6 wt.%) |

As a comparative SSF a commercial 3-layered SSF was used, wherein each layer was a polyethylene layer containing suitable additives (see Table 2). The outer, core and inner layers are present in a thickness ratio of 1:2:1 (OL:CL:IL). The composition of each layer is given in Table 2:

**Table 2:** Comparative SSF formulations.

| 3-layer polyethylene film | Formulations |
|---|---|
| Outer Layer of film (layer OL) | LLDPE (F19010, 88%), LDPE (1005FY20, 10%) UV protection masterbatch (2% ) |
| Core Layer of film (layer CL) | LLDPE (F19010, 88%), LDPE (1005FY20, 10%), UV protection masterbatch (2% ) |
| Inner Layer of film (layer IL) | LLDPE (F19010, 88%), LDPE (1005FY20, 10%), UV protection masterbatch (2% ) |

The characteristics of the other polymers used in the SSFs are given in Table 3:

**Table 3:** Base polymers of the SSFs.

| Resin name | Producer | Type | MFR$_2$ (g/10min) | Density (kg/m$^3$) |
|---|---|---|---|---|
| FK1828 | Borouge | Bimodal LLDPE 1-butene, 1-hexene, ethylene terpolymer | 1.5 | 918 |
| F19010 | Reliance Polymers | Unimodal LLDPE copolymer of ethylene and 1-butene | 1.0 | 918 |
| 1005FY20 | Reliance Polymers | Low density polyethylene homopolymer (LDPE) | 0.5 | 923 |

The additives used in the preparation of the films are as follows:
UV masterbatch 20 commercially available from Polmann India Ltd. was used as a UV-stabilizer.

Anti-drip agent was a commercially available anti-drip agent from Ray Color, India. The inventive SSF was produced on a 3-layer W&H - blown film plant with internal bubble cooling system having an output of 600 kgs/hr and cooling air temperatures were in between 12 to 16°C. The detailed parameters and temperature profile used for the preparation of the inventive SSFs are listed below in Table 4 and Table 5.

**Table 4:** Blown film line parameters.

| Blown film line parameters | |
|---|---|
| Die diameters | 630 mm |
| Die gap | 2.5 mm |
| Blow up ratio (BUR) | 2 : 1 |
| Bubble cooling | IBC |
| Cooling air temperature | 14 °C |

Table 5 lists the temperature profiles of the blown film line i.e., the temperatures used for different layers of the blown film extruders at different locations of the blown film line.

**Table 5:** Temperature profiles (°C) of the blown film line.

| | Extruder zone 1 | Extruder zone 2 | Extruder zone 3 | Extruder zone 4 | Extruder zone 5 | Post Extruder zone 6 | Post Extruder zone 7 | Post Extruder zone 8 |
|---|---|---|---|---|---|---|---|---|
| Outer Layer (OL) | 170 | 180 | 190 | 200 | 210 | 200 | 200 | 200 |
| Core/Middle Layer (CL) | 170 | 180 | 190 | 200 | 210 | 200 | 200 | 200 |
| Inner Layer (IL) | 170 | 180 | 190 | 200 | 210 | 200 | 200 | 200 |
| Die zones | 200 | | | | | | | |

The mechanical/optical properties of the inventive SSF are described in Table 6:

**Table 6:** Mechanical and optical properties of the inventive SSF.

| Properties | | Inventive SSF |
|---|---|---|
| Film Thickness | | 25 μm |
| Tens. Modulus | MD | 200 MPa |
| | TD | 210 MPa |

(continued)

| Properties | | Inventive SSF |
|---|---|---|
| Tens. Stress at break | MD | 44.9 MPa |
| | TD | 25.0 MPa |
| Nominal tens. Strain at break | MD | 412% |
| | TD | 615% |
| Tear strength | MD | 10 gf/$\mu$m |
| | TD | 14 gf/$\mu$m |
| Dart Drop Impact (DDI) | | 250 g |
| | | 10 g/$\mu$m |
| Haze | | 10% |
| Total light transmittance | | 91% |

Due to the high puncture (DDI) and tear resistance of the SSF, it was possible to increase the width of the film to 4 m.

The comparative SSF had a thickness of 40 $\mu$m and a width of 2 m.

During use in the field, the outer layer of the SSF is exposed to the direct sunlight (i.e. towards the atmosphere) and inner layer of the SSF is exposed to the soil (i.e. faces the ground).

Protected cultivation fields, i.e. Green Houses, in India were utilized for field trials of the inventive SSF and the comparative SSF.

Before the soil solarisation films were placed onto the field, the field was prepared for soil solarisation.

The field preparation included:

- Cleaning the field from weeds and debris so as not to spoil the SSF and because vegetation cover hinders heat penetration;
- Tilling the soil to break up large earth chunks that could damage or raise the SSF cover;
- Facultative soil aeration to decrease compaction since bulk earth density adversely affects water-holding capacity;
- Arranging beds (flat or raised);
- Making central elevations for covered strips for rainwater to run off the plastic and not cool it down;
- Placing drip irrigation lines to ensure that the moisture in the soil remains high enough during solarisation.

After land preparation and installation of drip irrigation lines to ensure enough moisture at soil profiles before spread of the SSFs in the Green Houses, the SSFs were placed on top of the soil in such a way that it was airtight and it was ensured that there were no leakages. The edges of the SSFs were buried in the soil. A sufficient moisture level was maintained during the trial with help of the drip lines.

The SSFs were left on the field for 4 to 6 weeks and the temperature of the soil measured at different depths. The measured average temperatures are shown in table 7.

**Table 7:** Average temperatures at different soil depths.

| Soil Depth [cm] | 1 | 2 | 5 | 10 |
|---|---|---|---|---|
| Inventive SSF | 53.7 °C | 52.4 °C | 49.6 °C | 46.7 °C |
| Comparative SSF | 51.6 °C | 51.3 °C | 48.3 °C | 45.1 °C |

As can be seen, the inventive SSF was able to store more heat and increased the average temperature by more than 1°C at each soil depth compared to the commercial, comparative SSF.

This increased temperature lead to a decrease in weed growth, smaller Nematode impact, i.e. pest & diseases, less seedling mortality, and an overall better yield in the subsequently planted crops.

The increased width of the inventive SSF also facilitates its installation and thereby saves both time and money.

**Claims**

1. A multilayer polyethylene film for soil solarisation comprising an inner layer (IL), an outer layer (OL) and a core layer (CL) between the inner and outer layer, **characterized in that**

   - the core layer (CL) comprises in a combined amount of at least 80 wt.-%, preferably in the range of 85 to 99 wt.-%, based on the total weight of the core layer, a first linear low density polyethylene LLDPE-A having a $MFR_2$ (190°, 2.16 kg), determined according to ISO 1133, of from 0.1 to 0.5 g/10 min, preferably, from 0.1 to 0.3 g/10 min, and a second linear low density polyethylene LLDPE-B having a $MFR_2$ (190°, 2.16 kg), determined according to ISO 1133, of from 0.9 to 2.2 g/10 min, preferably from 1.1 to 1.9 g/10 min;
   - the inner layer (IL) comprises the second linear low density polyethylene LLDPE-B in an amount of at least 60 wt.-%, preferably in the range of 65 to 95 wt.-%, based on the total weight of the inner layer; and
   - the outer layer (OL) comprises the second linear low density polyethylene LLDPE-B in an amount of at least 60 wt.-%, preferably in the range of 65 to 95 wt.-%, based on the total weight of the outer layer.

2. The multilayer polyethylene film according to claim 1, wherein

   - the LLDPE-A has a density of from 915 to 930 $kg/m^3$, more preferably from 918 to 925 $kg/m^3$, determined according to ISO 1183, and
   - the LLDPE-B has a density of from 912 to 925 $kg/m^3$, more preferably from 915 to 921 $kg/m^3$, determined according to ISO 1183.

3. The multilayer polyethylene film according to any one of the preceding claims, wherein

   - the LLDPE-A is a copolymer of ethylene and one comonomer selected from alpha-olefins having from 4 to 6 carbon atoms, preferably 1-butene; and/or
   - the LLDPE-B is a terpolymer of ethylene and two comonomers selected from alpha-olefins having from 4 to 8 carbon atoms, preferably 1-butene and 1-hexene.

4. The multilayer polyethylene film according to any one of the preceding claims, wherein the LLDPE-A has a molecular weight distribution (MWD) in the range of 10 to 30, preferably 15 to 21.

5. The multilayer polyethylene film according to any one of the preceding claims, wherein the LLDPE-A in the core layer contains two polyethylene fractions A and B in a combined amount of at least 95 wt.%, preferably 96 to 100 wt.%, based on the total amount of the LLDPE-A, wherein polyethylene fraction A has a $MFR_2$ (190°, 2.16 kg), determined according to ISO 1133, in the range of from 100 to 500 g/10 min, preferably 200 to 400 g/10 min; and the weight ratio between polyethylene fraction A and polyethylene fraction B is in the range of 30:70 to 50:50.

6. The multilayer polyethylene film according to any of the preceding claims, wherein the weight ratio between the LLDPE-A and the LLDPE-B in the core layer (CL) is in the range of 15:1 to 5:1 and the combined amount of LLDPE-A and the LLDPE-B is at least 92 wt.%, based on the total weight of the core layer, preferably the weight ratio is 12:1 to 7:1 and the combined amount is in the range of 95.0 to 99.9 wt.-%.

7. The multilayer polyethylene film according to any of the preceding claims, wherein the thickness ratios between the three layers (OL:CL:IL) is in the range of 0.8-1.2:1.8-2.2:0.8-1.2, preferably 1:2:1.

8. The multilayer polyethylene film according to any of the preceding claims, wherein at least one, preferably both of the inner and outer layers further comprise a low density polyethylene LDPE, wherein the weight ratio between the LLDPE-B and the LDPE is in the range of 15:1 to 5:1 and the combined amount of LLDPE-B and LDPE is at least 88 wt.%, based on the total weight of the respective inner or outer layer, preferably the weight ratio is in the range of 10:1 to 6:1 and the combined amount is in the range of 90 to 99 wt.%.

9. The multilayer polyethylene film according to any of the preceding claims, wherein at least one, preferably all of the inner, outer and core layers further comprise a UV-stabilizer as an additive and wherein the film optionally further comprises additives selected from the group consisting of slip agents, anti-blocking agents, antioxidants, polymer processing aids and anti-drip agents.

10. The multilayer polyethylene film according to any of the preceding claims, wherein the film does not comprise a colorant as an additive.

11. The multilayer polyethylene film according to any one of the preceding claims, wherein the film consists of the inner, outer and core layer and

- the inner layer (IL) consists of the LLDPE-B in an amount in the range of 79 to 85 wt.%, the LDPE in an amount in the range of 7 to 13 wt.%, a UV-stabilizer as an additive in an amount in the range of 1 to 3 wt.%, an anti-drip agent as an additive in an amount in the range of 4 to 8 wt.% and further additives in a combined amount of less than 7 wt%;
- the core layer (CL) consists of the LLDPE-A in an amount in the range of 85 to 91 wt.%, the LLDPE-B in an amount in the range of 7 to 13 wt.%, a UV-stabilizer as an additive in an amount in the range of 1 to 3 wt.% and further additives in a combined amount of less than 7 wt%; and
- the outer layer (OL) consists of the LLDPE-B in an amount in the range of 85 to 91 wt.%, the LDPE in an amount in the range of 7 to 13 wt.%, a UV-stabilizer as an additive in an amount in the range of 1 to 3 wt.%, and further additives in a combined amount of less than 7 wt%;

wherein the weight percentages are based on the total weight of each layer; the combined amount of the polyethylenes and additives in each layer adds up to 100 wt.%, and the further additives are selected from the group consisting of slip agents, anti-blocking agents, antioxidants and polymer processing aids.

12. The multilayer polyethylene film according to any one of the preceding claims, wherein the film has

- a total light transmittance, determined according to ASTM D 1003, of more than 85%, more preferably in the range of 88 to 99%; and
- a haze, determined according to ASTM D 1003, of less than 15%, preferably in the range of 1 to 14%.

13. The multilayer polyethylene film according to any one of the preceding claims, wherein the film has

- a thickness in the range of from 10 to 100 $\mu$m, preferably in the range from 12 to 50 $\mu$m, more preferably in the range from 15 to 35 $\mu$m; and/or
- a width of at least 2 m, preferably in the range of 3 to 5 m.

14. A soil solarisation system comprising:

i) crop-free soil
ii) the multilayer polyethylene film according to any of the preceding claims placed on top of the soil; and
iii) a drip irrigation system between the film and the soil.

15. Use of the multilayer polyethylene film according to any one of claims 1 to 13 for soil solarisation, preferably for at least two soil solarisation cycles.

Europäisches
Patentamt

European
Patent Office

Office européen
des brevets

## EUROPEAN SEARCH REPORT

**Application Number**

EP 23 22 0710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/280800 A1 (BOREALIS AG [AT]) 12 January 2023 (2023-01-12) * abstract; claims 1-14 * * pages 7,17,24 * | 1-3 | INV. B32B27/08 B32B27/18 B32B27/32 C08J5/18 C08L23/06 |
| X | US 2010/304062 A1 (DAVIKNES HANS GEORG [NO] ET AL) 2 December 2010 (2010-12-02) * abstract; claims 23-45 * * paragraphs [0150] - [0155]; example 3 * * paragraph [0106] * * paragraph [0042] * * paragraphs [0054], [0057] * * paragraphs [0058] - [0079] * * paragraph [0084] * | 1-13 | |
| X | ES 2 116 226 B1 (MITSUI CHEMICALS INC [JP]) 1 April 1999 (1999-04-01) * the whole document * | 1-15 | |
| A | EP 4 296 298 A1 (ABU DHABI POLYMERS CO LTD BOROUGE LLC [AE]; BOREALIS AG [AT]) 27 December 2023 (2023-12-27) * abstract; claims 1-15 * | 1-15 | TECHNICAL FIELDS SEARCHED (IPC) B32B C08J C08L |

The present search report has been drawn up for all claims

| Place of search | Date of completion of the search | Examiner |
|---|---|---|
| The Hague | 23 May 2024 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0710

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | Publication date | Patent family member(s) | | Publication date |
|---|---|---|---|---|
| WO 2023280800 A1 | 12-01-2023 | CN | 117677498 A | 08-03-2024 |
| | | EP | 4116091 A1 | 11-01-2023 |
| | | WO | 2023280800 A1 | 12-01-2023 |
| US 2010304062 A1 | 02-12-2010 | AT | E443611 T1 | 15-10-2009 |
| | | AT | E469758 T1 | 15-06-2010 |
| | | AU | 2007334870 A1 | 26-06-2008 |
| | | BR | PI0720493 A2 | 04-02-2014 |
| | | CA | 2671792 A1 | 26-06-2008 |
| | | CN | 101563226 A | 21-10-2009 |
| | | EP | 1941998 A1 | 09-07-2008 |
| | | EP | 2121318 A1 | 25-11-2009 |
| | | ES | 2329608 T3 | 27-11-2009 |
| | | ES | 2346930 T3 | 21-10-2010 |
| | | US | 2010304062 A1 | 02-12-2010 |
| | | WO | 2008074493 A1 | 26-06-2008 |
| ES 2116226 B1 | 01-04-1999 | CN | 1147449 A | 16-04-1997 |
| | | ES | 2116226 A1 | 01-07-1998 |
| | | FR | 2734989 A1 | 13-12-1996 |
| | | KR | 970001443 A | 24-01-1997 |
| EP 4296298 A1 | 27-12-2023 | EP | 4296298 A1 | 27-12-2023 |
| | | WO | 2023247492 A1 | 28-12-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004000933 A1
- WO 2016083208 A
- EP 1378528 A1

### Non-patent literature cited in the description

- **HANS ZWEIFEL**. Plastic Additives Handbook. 2001, 871-873
- **HANS ZWEIFEL**. Plastic Additives Handbook. 2001, 840-869
- **KLIMKE, K.** ; **PARKINSON, M.** ; **PIEL, C** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C** ; **KAMINSKY, W.** *Macromolecules*, 2004, vol. 37, 813
- **FILIP, X.** ; **TRIPON, C** ; **FILIP, C**. *J. Mag. Resn.*, 2005, vol. 176, 239
- **GRIFFIN, J.M.** ; **TRIPON, C** ; **SAMOSON, A.** ; **FILIP, C** ; **BROWN, S.P.** *Mag. Res. in Chem.*, 2007, vol. 45 (SI), S198
- **CASTIGNOLLES, P.** ; **GRAF, R.** ; **PARKINSON, M.** ; **WILHELM, M.** ; **GABORIEAU, M.** *Polymer*, 2009, vol. 50, 2373